# EUROPÄISCHE PATENTSCHRIFT

(11) **EP 3 000 794 B1**
(45) Veröffentlichungstag und Bekanntmachung des Hinweises auf die Patenterteilung: **19.06.2019**
(21) Anmeldenummer: 14186287.0
(22) Anmeldetag: 24.09.2014
(51) Int. Cl.: C04B 35/18, C04B 35/632, C04B 38/10, C04B 40/00

(54) **VERFAHREN ZUR HERSTELLUNG EINER SCHAUMKERAMIK**
METHOD FOR PRODUCING A FOAMED CERAMIC
PROCÉDÉ DE FABRICATION D'UNE CÉRAMIQUE EXPANSÉE

(43) Veröffentlichungstag der Anmeldung: 30.03.2016
(73) Patentinhaber: Rath, Matthias, 1010 Wien (AT)
(72) Erfinder: Rath, Matthias, 1010 Wien (AT)
(74) Vertreter: Weiser & Voith Patentanwälte Partnerschaft

(56) Entgegenhaltungen:
- EP-A1- 1 842 839
- CN-A- 103 145 444
- DE-A1- 3 326 271

## Beschreibung

Die vorliegende Erfindung betrifft ein Verfahren zur Herstellung einer Schaumkeramik.

Schaumkeramiken haben aufgrund darin auftretender Luftbläschen geringere Dichte und Festigkeit als herkömmliche Keramiken, selbst wenn diese Poren aufweisen. Der Porengehalt (die "Porosität") entspricht dem Verhältnis von Hohlraumvolumen zu Gesamtvolumen und beträgt beispielsweise bei Ziegeln - z.B. Feuerleichtsteinen - je nach Rohstoffen und Brennweise etwa 10% bis 80%. Im Unterschied dazu haben Schaumkeramiken eine Porosität von in der Regel mehr als 90% und kontrolliert erzeugte Poren.

Geschäumte mineralische Bau- und Werkstoffe (z.B. Schaumkeramik) werden heute beispielsweise als Schaumbetone zur Wärmedämmung hergestellt, siehe die WO 2011/044605 A1 oder DE 197 08 799 A1, welche jedoch bloß eine sehr geringe Festigkeit erreichen und deshalb kaum Verbreitung finden. Andere Schaumkeramiken mit makroporöser, offenporiger Schaumstruktur, wie beispielsweise in der WO 2013/137727 A1 beschrieben, kommen bei der Filtration von Metallen zum Einsatz.

Aus der EP 1 842 839 A1 ist ein Verfahren zur Herstellung eines porösen Körpers bekannt, umfassend das Herstellen einer wässrigen Suspension, Verrühren der Suspension zu einem Leichtschaum, Rühren des Leichtschaums mit einem Pulver zu Schwerschaum, Gießen des Schwerschaums in eine Form, Trocknen in der Form und Brennen.

Zur kontrollierten Erzeugung von Poren im Inneren von gebrannten Keramiken sind im Allgemeinen drei Verfahren bekannt: Erstens kann einem fließfähigen Rohstoff vor dem Brennen ein Porosierungsmittel untergemischt werden, welches beim Brennen ausbrennt und Poren hinterlässt, die in Korngröße und -form dem Porosierungsmittel entsprechen; dabei besteht allerdings durch die Gasentwicklung beim Ausbrennen die Gefahr von Rissbildungen. Zweitens kann die fließfähige Rohstoff-Suspension an eine strukturierte (offenporige) Vorlage angelagert werden, sodass diese beim Ausbrennen repliziert wird ("Replikatechnik"); mit diesem Verfahren sind jedoch nur offenporige, durchströmbare Schaumkeramiken herstellbar, welche für Dämmstoffe weniger geeignet sind. Drittens kann durch direktes Verschäumen der fließfähigen Rohstoff-Suspension ein Nassschaum und durch nachfolgendes Brennen eine Schaumkeramik erzeugt werden; da der Nassschaum recht instabil ist, ist in diesem Fall das kontrollierte Erzeugen von Poren schwierig.

Die Erfindung setzt sich zum Ziel, ein Verfahren zur Herstellung von Schaumkeramik zu schaffen, welches eine gute Kontrollierbarkeit der Porengröße erlaubt und dabei eine Keramik mit geringer Wärmeleitfähigkeit und ausreichend hoher Festigkeit für Dämmstoffe liefert.

Dieses Ziel wird durch ein Verfahren erreicht, welches die Schritte umfasst:
Herstellen einer wässrigen Suspension eines ersten mineralischen Rohstoffs;
Verschäumen der Suspension mit Luft unter Beigabe eines Schaummittels und eines Bindemittels zu einem Leichtschaum;
Mischen des Leichtschaums mit einem Pulver oder Schlicker eines zweiten keramischen Rohstoffs zu einem Schwerschaum;
Gießen des Schwerschaums in eine Form;
Trocknen des geformten Schwerschaums in der Form zu einem festen Schaum; und
Brennen des festen Schaums in der Form zu der Schaumkeramik;
wobei zum Verschäumen und/oder zum Mischen Linearmischer eingesetzt werden.

Dieses Verfahren stellt ein neuartiges Hybridverfahren aus Direktverschäumung und Replikatechnik dar, in welchem der Leichtschaum des ersten keramischen Rohstoffs gleichsam als Vorlage mit dem Schlicker bzw. dem Pulver des zweiten keramischen Rohstoffs vermischt wird. So lässt sich eine - zumindest überwiegend - geschlossenporige Schaumkeramik erzeugen, wobei der zweite keramische Rohstoff die Bläschen des Leichtschaums belädt, d.h. sich an deren Wänden anlagert, und dadurch zunächst stabilisiert und in der fertigen Schaumkeramik dauerhaft stärkt. Da die Vorlage einen Anteil der keramischen Struktur bildet, wird sie nicht ausgebrannt, wie eine Vorlage bei herkömmlicher Replikatechnik, sodass es zu keiner die Struktur der Schaumkeramik gefährdenden Gasentwicklung kommt. Durch Variation der Rohstoffe, des Verschäumens und der Schaum- und Bindemittel können Porengröße und Porosität der Schaumkeramik in weiten Bereichen an unterschiedliche Erfordernisse angepasst werden. Ferner kann dieses Verfahren kontinuierlich ausgeführt werden: Die zum Verschäumen bzw. Mischen eingesetzten Linearmischer führen zu wiederholbar homogenen Leicht- bzw. Schwerschäumen und begünstigen die Umsetzung als kontinuierliches Verfahren. Die erzeugte Schaumkeramik eignet sich - z.B. in Plattenform - als Wärmedämmstoff in Hochtemperaturbereichen bis ca. 1000°C oder sogar ca. 2000°C je nach eingesetzten Rohstoffen.

Günstig ist die Verwendung einer verlorenen Form, die im Schritt des Brennens zumindest teilweise abbrennt. An solchen Formen gibt es eine breite Auswahl mit vielfältigen Unterschieden in ihren Eigenschaften, sodass für verschiedene Erfordernisse viel einfacher eine jeweils geeignete Form gefunden werden kann, als dies bei wiederverwendbaren Formen möglich wäre; beispielsweise kann eine wasserabweisende Form mit zugleich hoher Dampfdiffusionsfähigkeit gewählt werden, sodass diese einerseits nicht unkontrollierbar Flüssigkeit und mit ihr Rohstoff-Feinpartikel aus dem eingegossenen Schwerschaum ansaugt, wodurch auch die Randbereiche der Schaumkeramik gleichmäßige, feste Struktur erhalten, und andererseits den Verlauf des Trocknens durch gleichmäßige Diffusion des Wasserdampfs begünstigt.

Dazu ist die Form bevorzugt aus Bagasse oder Polymilchsäure (PLA) gefertigt. Diese Materialien sind ausreichend wasserabweisend und haben einen geringen Dampfdiffusionswiderstand. Ferner haben Bagasse und PLA im Abbrand keine nachteilige Auswirkung auf die Schaumkeramik.

Da der feste Schaum sehr empfindlich ist, wird er bevorzugt zwischen den Schritten des Trocknens und des Brennens nicht manipuliert. So können Schäden infolge des Lösens des festen Schaums aus der Form vermieden werden.

Zu einer stabilen Schaumkeramik mit hoher Festigkeit führt das Verfahren, wenn der erste mineralische Rohstoff ein zweikomponentiges Pulver aus Muskovit-Glimmer und Quarz ist, bevorzugt mit einer d50-Korngröße von maximal 10 µm, besonders bevorzugt etwa 3 µm ist.

Ebenfalls als vorteilhaft hat sich erwiesen, wenn der zweite mineralische Rohstoff ein zweikomponentiges Pulver aus Muskovit-Glimmer und Quarz ist, bevorzugt mit einer d50-Korngröße von maximal 25 µm, besonders bevorzugt etwa 4 µm. Die d50-Korngröße bezeichnet dabei jene Korngröße, welche 50% der Partikel eines pulvrigen Rohstoffs unterschreiten. Derartige mineralische Rohstoffe sind beispielsweise kommerziell unter den Handelsnamen Aspolit® F30 (d50 = 3 µm) bzw. Aspolit® F40 (d50 = 4 µm) von der Firma Aspanger Bergbau und Mineralwerke GmbH & Co KG in Aspang, Österreich, erhältlich.

In einer alternativen Ausführungsvariante sind der erste und der zweite mineralische Rohstoff jeweils ein Pulver aus synthetischem Sintermullit, bevorzugt mit einer jeweiligen d50-Korngröße von maximal 30 - 40 µm, besonders bevorzugt etwa 3 - 5 µm. Eine Schaumkeramik auf Basis eines solchen Sintermullits ist bis etwa 1600°C temperaturbelastbar und somit für Anwendungen mit besonders hohen Temperaturen geeignet. Solche synthetischen Sintermullite sind beispielsweise kommerziell unter dem Handelsnamen Symulox® M72 (Korngröße K0 C) der Firma Nabaltec AG in Schwandorf, Deutschland, erhältlich.

Um einen besonders gleichmäßigen Leichtschaum zu erhalten, ist es günstig, wenn die Suspension im Schritt des Herstellens mehrere Stunden, bevorzugt zumindest 6 h, mit Mahlkugeln nassgemahlen wird. So können Agglomerationen des pulvrigen ersten Rohstoffs aufgebrochen und bereits vor dem Verschäumen eine sehr homogene Partikelverteilung erreicht werden.

Bevorzugt wird als Schaummittel ein nicht-ionisches Tensid oder ein Protein eingesetzt. Solche Schaummittel führen nicht nur zu einer hohen Verschäumungszahl und ermöglichen dadurch die Herstellung auch eines besonders leichten Schaums, sondern es ergibt sich dabei auch eine größere Wandstärke des Schaums von typisch etwa 40 nm, die ein Anlagern der Partikel des zweiten mineralischen Rohstoffs begünstigt, sodass die Schaumkeramik besonders stabile geschlossene Poren und damit eine besonders geringe Wärmeleitfähigkeit erhält.

Besonders günstig ist es, wenn als Bindemittel ein oder mehrere Vertreter aus der Gruppe Zellulosefasern, Zellulosederivate, Amylose, Amylopektin oder Cellobiose eingesetzt wird/werden. Diese Gruppe weist keine oder nur sehr geringe Wechselwirkungen mit dem Schaum und vielen Schaummitteln auf, sodass bereits der (nasse) Leichtschaum sehr stabil bleibt, wodurch sich besonders leichte Schaumkeramiken in gleichmäßiger Dichte herstellen lassen.

Wird der Leichtschaum mit Schlicker gemischt, so ist dieser bevorzugt zusätzlich mit einem Verflüssiger versehen. Dadurch kann der Einsatz von Wasser reduziert und folglich die Trocknung beschleunigt und die instabile Nassphase des Schaums verkürzt werden. Zugleich erhöht der Verflüssiger die Fließfähigkeit des Schlickers und erleichtert dadurch das Mischen des Leichtschaums mit dem Schlicker zu einem homogenen Schwerschaum. Als besonders wirksam hat sich dabei erwiesen, wenn der Verflüssiger auf Alkalihuminaten und/oder Alkalisilikaten basiert. Ein solcher Verflüssiger ist beispielsweise kommerziell unter dem Handelsnamen Dolaflux® SP 11 von der Firma Zschimmer & Schwarz GmbH & Co KG Chemische Fabriken in Lahnstein, Deutschland, erhältlich.

Der Trocknungsverlauf wird begünstigt, wenn das Trocknen bei einer Temperatur zwischen 30° und 200°C, bevorzugt zwischen 40° und 95°C, besonders bevorzugt bei etwa 50°C, erfolgt. Dadurch kann der feste Schaum unter gezielter Steuerung seiner Eigenschaften kontrolliert erzeugt werden, ohne dass aufgrund zu langer Trocknungszeiten die instabile Nassphase des Schwerschaums dessen Zerfallen fördert oder durch zu rasches Trocknen ein ungleichmäßiger fester Schaum mit Rissen in seiner Struktur entsteht.

Um eine gute Versinterung für eine ausreichende Festigkeit der Schaumkeramik zu erzielen, ist es günstig, wenn das Brennen bei einer Temperatur zwischen 400° und 2000°C, bevorzugt zwischen 500° und 1650°C, besonders bevorzugt bei etwa 960°C, erfolgt. Dies vermeidet übermäßige Brennschwindungen und eine mögliche Blähwirkung, die bei einigen Rohstoffen zu unkontrollierbarer Porenbildung führt, wird verringert.

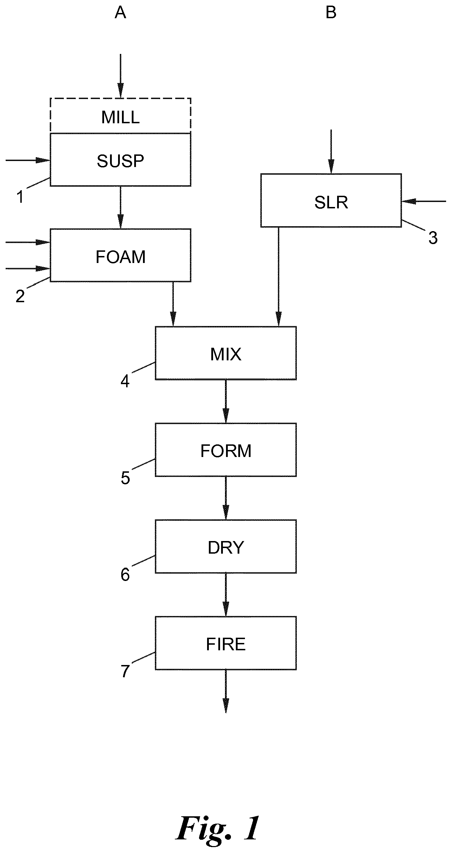

Die Erfindung wird nachfolgend anhand von in der einzigen beigeschlossenen Zeichnung dargestellten mehreren weiter unten beschriebenen Ausführungsbeispielen näher erläutert. Fig. 1 zeigt das erfindungsgemäße Verfahren und verschiedene Ausführungsvarianten dazu in einem schematischen Flussdiagramm.

Gemäß Fig. 1 wird in einem Schritt 1 eines Verfahrenszweigs A eine wässrige Suspension eines ersten mineralischen Rohstoffs hergestellt. Optional wird dabei die Suspension zum Aufbrechen von Agglomerationen und zur Homogenisierung über mehrere Stunden, bevorzugt mindestens 6 h, mit Mahlkugeln nassgemahlen, wie in Fig. 1 durch den gestrichelten Bereich des Schritts 1 versinnbildlicht ist.

Die Suspension wird in einem Schritt 2 unter Beigabe eines Schaummittels und eines Bindemittels mit Luft zu einem Leichtschaum auf das 5- bis 25-fache ihres Volumens verschäumt, sodass die Dichte des Leichtschaums etwa 20 g/l bis 300 g/l beträgt. Das Verschäumen kann z.B. mit einem Korbrührer oder in einem Linearmischer erfolgen.

Als Schaummittel können oberflächenaktive Substanzen aus den Klassen der anionischen und nicht-ionischen Tenside oder der pflanzlichen, tierischen oder künstlichen Proteine eingesetzt werden, z.B. Ethoxylate, Alkylglycoside, Aminoxide, Natriumolefin, Fettalkohole, Natriumlaurylsulfat oder Ammoniumlaurylsulfat. Als Bindemittel sind neben feuerfestem Zement auch Kalziumhydrat, Gips, verschiedene Formen von Silica wie Micro- oder Nanosilica, sowie bauchemische Additive wie Stärke, Zellulosefasern, Zellulosederivate oder Cellobiose verwendbar, wobei sich Zellulosefasern, Zellulosederivate, Amylose, Amylopektin oder Cellobiose als besonders geeignet herausgestellt haben. Wenn gewünscht, können auch jeweils zwei oder mehrere verschiedene Schaummittel und/oder Bindemittel sowie Entwässerungsmittel in dem Fachmann bekannter Art und Weise eingesetzt werden.

In einem zum Verfahrenszweig A parallelen, d.h. vor-, neben- oder nachgeordneten, Verfahrenszweig B wird in einem Schritt 3 ein Pulver eines zweiten keramischen Rohstoffs bereitgestellt und/oder ein Schlicker dieses Rohstoffs erzeugt.

Als erster bzw. zweiter mineralischer Rohstoff sind beispielsweise Kaolin, Metakaolin, Glimmer bzw. Mica, Feldspat, Ton, Porzellan, Schamotte, Siliziumdioxid, Andalusit und Kyanit, Bauxit, Mullit (Schmelz- und/oder Sintermullit), Aluminiumdioxid (Schmelzkorund und/oder gesinterte Tonerde), Aluminiumzirkonsilikat bzw. Zirkonmullit, Zirkon bzw. Zirkonsilikat, Zirkonoxid bzw. Baddeleyit oder Siliziumkarbid in verschiedenen Körnungen sowie Mischungen daraus geeignet. Überdies kann bereits gebrannte, gemahlene Keramik bzw. Schaumkeramik rezykliert werden.

In einer Ausführungsvariante werden als erster und zweiter mineralischer Rohstoff jeweils ein zweikomponentiges Pulver aus Muskovit-Glimmer und Quartz eingesetzt, welches bei Verwendung als erster mineralischer Rohstoff eine d50-Korngröße von maximal 10 µm, bevorzugt etwa 3 µm, und im Falle des zweiten mineralischen Rohstoffs eine d50-Korngröße von maximal 25 µm, bevorzugt etwa 4 µm aufweisen. Die d50-Korngröße wird von 50% der Partikel eines pulvrigen Rohstoffs unterschritten. Derartige Rohstoffe sind beispielsweise als Aspolit® F30 (d50 = 3 µm) bzw. Aspolit® F40 (d50 = 4 µm) der Firma Aspanger Bergbau und Mineralwerke GmbH & Co KG in Aspang, Österreich, erhältlich. Aspolit® ist laut Herstellerangaben chemisch folgendermaßen charakterisiert: 69,0% SiO₂, 14,0% AI₂O₃, 5,5% K₂O, 2,0% CaO, 2,0% Fe₂O₃, 2,0% MgO, 0,4% TiO₂, 0,2% P₂O₅, 0,03% MnO, 4,87% Glühverlust.

In einer dazu alternativen Variante werden als erster und zweiter mineralischer Rohstoff jeweils ein synthetischer Sintermullit eingesetzt, welche z.B. jeweils eine d50-Korngröße von maximal 30 - 40 µm, bevorzugt etwa 3 - 5 µm aufweisen. Derartige Sintermullite sind beispielsweise als Symulox® M72 (Korngröße K0 C) der Firma Nabaltec AG in Schwandorf, Deutschland, erhältlich. Symulox® M72 ist laut Herstellerangaben chemisch folgendermaßen charakterisiert: 72% AI₂O₃, 26% SiO₂, 0,3% Fe₂O₃, 0,2% TiO₂, 0,05% CaO, 0,1% MgO, 0,2% Na₂O, 0,6% K₂O.

Der erste mineralische Rohstoff kann sich dabei vom zweiten einerseits in seiner Zusammensetzung und andererseits in seiner Korngröße unterscheiden; es können jedoch auch Zusammensetzung und/oder Korngröße gleich sein, wie die genannten Ausführungsvarianten zeigen.

Zur Reduktion des Wassereinsatzes bei der Schlickererzeugung kann ein Verflüssiger, z.B. auf Alkalihuminat und/oder Alkalisilikat-Basis, beigegeben werden. Als wirksam hat sich dabei Dolaflux® SP 11 der Firma Zschimmer & Schwarz GmbH & Co KG Chemische Fabriken in Lahnstein, Deutschland, erwiesen.

In einem Schritt 4 gemäß Fig. 1 wird der in Schritt 2 erzeugte Leichtschaum mit dem in Schritt 3 bereitgestellten Pulver und/oder dem erzeugten Schlicker zu einem Schwerschaum mit einer Dichte zwischen 50 g/l und 1500 g/l gemischt ("geblendet"), beispielsweise mithilfe eines Doppelwellen-Korbrührers oder eines weiteren Linearmischers, und danach in einem Schritt 5 in eine Form gegossen. Um eine Aufnahme von Wasser und damit auch feiner Partikel aus dem Schwerschaum zu vermeiden, kann die Form wasserabweisend, z.B. mit einer Polyethylenfolie ausgekleidet, sein.

In der Form wird der feststoffbeladene flüssige Schwerschaum in einem Schritt 6 zu einem festen Schaum getrocknet und dieser - bevorzugt weiterhin in der Form, d.h. ohne weitere Manipulation - zu einer Schaumkeramik gebrannt (Schritt 7).

Das Trocknen von Schritt 6 erfolgt beispielsweise bei einer Temperatur zwischen 30° und 200°C, bevorzugt zwischen 40° und 95°C, besonders bevorzugt bei etwa 50°C, und das Brennen von Schritt 7 bei einer Temperatur zwischen 400° und 2000°C, bevorzugt zwischen 500° und 1650°C, besonders bevorzugt bei etwa 960°C.

Im Schritt 6 des Trocknens kann ein Heißlufttrockner, ein Radio- oder ein Mikrowellentrockner eingesetzt werden. Dabei wird je nach Formgröße, -beschaffenheit, Feuchtigkeit der Umgebungsluft und des Schwerschaums, seinen Bestandteilen, dem Trocknertyp und der Luftzirkulation darin für mehrere Stunden, typisch 3 bis 6 Stunden, der feste Schaum bis zu einer Restfeuchte von weniger als 5 Gew.-%, bevorzugt weniger als 1 Gew.-%, getrocknet. Wie dem Fachmann bekannt ist, kann dabei - wie ebenso beim Brennen 7 - die Temperatur verändert, z.B. schrittweise erhöht, werden. Der Brennvorgang (Schritt 7) dauert meist weniger als 6 Stunden, typisch etwa 1 bis 3 Stunden.

Die verwendete Form kann temperaturbeständig, z.B. ein Netz aus Edelstahldraht oder eine Schale aus Schamotte oder Feuerbeton, und damit wiederverwendbar sein; alternativ kann es sich um eine verlorene Form handeln, die im Schritt 7 des Brennens möglichst rückstandsfrei verbrennt. Eine solche ist beispielsweise aus einem Biokunststoff - z.B. einem zellulosebasierten Kunststoff, Stärke oder einem Stärkegemisch, Polymilchsäure (PLA), Polyhydroxyalkanoate oder Bagasse - oder aus hydrophobiertem Papier oder Karton gefertigt und lässt dadurch eine hohe Dampfdiffusion zu. Überdies sind Mischvarianten der Formen möglich, wobei z.B. eine Kartonform durch ein Edelstahldrahtgeflecht gestützt wird, sodass nur der Karton-Anteil der Form abbrennt, oder eine Schale aus Schamotte mit einer eventuell perforierten Polyethylen-Folie ausgelegt ist, sodass nur diese Folie abbrennt.

Im Folgenden sind einige Verfahrensbeispiele und in der anschließenden Tabelle 1 die zugehörigen Kenndaten der erzeugten Schaumkeramiken angegeben.

### Beispiel 1:

Als erster mineralischer Rohstoff wurde ASPOLIT® F30 (d50 = 3 µm) 6 h mit Mahlkugeln nassgemahlen, sodass sich eine Suspension mit 50 Gew.-% Feststoff ergab. Als Schaummittel wurde nach Herstellerangaben dosiertes Protein und als Bindemittel Zellulosefasern beigemengt; nach dem Aufschäumen in einem Linearmischer hatte der Leichtschaum eine Dichte von ca. 40 g/l.

Mithilfe eines dünngliedrigen gegenläufigen Doppelwellen-Korbrührers wurde der Leichtschaum mit einem wässrigen Schlicker vermischt, der mit ASPOLIT® F40 (d50 = 4 µm) als zweitem mineralischen Rohstoff unter Beigabe von Dolaflux® SP 11 als Verflüssiger erzeugt wurde; der resultierende Schwerschaum hatte eine Dichte von 260 g/l.

Der Schwerschaum wurde in eine mit Polyethylen ausgekleidete Kartonform von 100 x 100 x 40 mm³ gegossen, bei 50°C für 6 h getrocknet und darauf im selben Ofen ohne Manipulation bei 960°C für 2 h gebrannt.

### Beispiel 2:

Im Unterschied zu Beispiel 1 wurde im Beispiel 2 der erste Rohstoff (wieder ASPOLIT® F30) 8 h mit Mahlkugeln nassgemahlen und geringer aufgeschäumt, sodass die Dichte des Leichtschaums ca. 60 g/l und die Dichte des Schwerschaums 320 g/l betrug. Das Trocknen erfolgte bei 70°C für 5 h. Alle übrigen Verfahrensparameter waren wie in Beispiel 1.

### Beispiel 3:

In diesem Beispiel wurde als erster Rohstoff ASPOLIT® F40 3 h mit Mahlkugeln nassgemahlen, mit einem abschließenden Feststoffgehalt von 45 Gew.-%. Als Schaum- bzw. Bindemittel kamen - dosiert nach Herstellerangabe - Aminoxid bzw. Cellobiose zum Einsatz. Der Leichtschaum hatte eine Dichte von 60 g/l. Der Schlicker wurde mit ASPOLIT® G200 (d50 = 18 µm) ohne zusätzlichen Verflüssiger erzeugt. Die resultierende Dichte des Schwerschaums war 380 g/l. Der Schwerschaum wurde in eine Bagasse-Form (100 x 100 x 40 mm³) gegossen, bei 60°C für 5 h getrocknet und bei 1030°C für 2 h gebrannt.

### Beispiel 4:

In diesem Fall wurde ASPOLIT® F30 12 h mit Mahlkugeln nassgemahlen; der Feststoffanteil betrug dann 55 Gew.-%. Als Schaum- bzw. Bindemittel wurden Aminoxid (nach Herstellerangaben) bzw. 2,5 Gew.-% Zement beigesetzt und die Suspension auf eine Dichte von 35 g/l aufgeschäumt. Die Dichte des Schwerschaums nach dem Mischen mit dem Schlicker (hier: mit ASPOLIT® F70, d50 = 7 µm, und Dolaflux® SP 11 als Verflüssiger) betrug 220 g/l; wieder wurde in eine Bagasse-Form nach Beispiel 3 gegossen, bei 50°C für 4 h getrocknet und bei 900°C für 2 h gebrannt.

### Beispiel 5:

Mullit, Nano-Tonerde und Nano-Silica wurden hier in Pulverform mit einer spezifischen Oberfläche von mehr als 50 m²/g im Verhältnis 2:1 mit Wasser verrührt; der Feststoffanteil betrug danach 60 Gew.-%. Als Schaummittel wurde nach Herstellerangaben dosiertes Protein und als Bindemittel Zellulosefasern beigemengt; die Suspension wurde im Linearmischer auf eine Dichte von 200 g/l aufgeschäumt. Die Dichte des Schwerschaums nach Einstreuen und Unterheben von pulvrigem synthetischem Sintermullit (Symulox® M72, Korngröße K0 C mit d50 = 3 - 5 µm) betrug 480 g/l. Der Schwerschaum wurde in eine PLA-Form gegossen, bei 50°C für 4 h getrocknet und bei 1600°C für 2 h gebrannt.

Die Ergebnisse der Beispiele 1 bis 5 sind in der nachfolgenden Tabelle 1 angeführt.

**Tabelle 1**

| | Bsp.1 | Bsp.2 | Bsp.3 | Bsp.4 | Bsp.5 |
|---|---|---|---|---|---|
| Dichte der Schaumkeramik [g/l] | 180 | 220 | 260 | 150 | 310 |
| Porosität | 93,3% | 91,9% | 90,4% | 94,4% | 90,3% |
| Wärmeleitfähigkeit [W/(m·K)] (ASTM bei 200°C) | 0,06 | 0,07 | 0,1 | 0,07 | 0,27 |
| Kaltdruckfestigkeit [MPa] | 0,25 | 0,7 | 0,8 | 0,2 | 1,0 |

Wie ersichtlich erzielten die Schaumkeramiken aller Beispiele 1 bis 5 eine sehr niedrige Wärmeleitfähigkeit und damit gute Dämmeigenschaften; auch sind die jeweiligen Kaltdruckfestigkeiten vergleichbar mit jenen herkömmlicher Niedertemperatur-Dämmstoffe, z.B. Schaumpolystyrol (wie Styropor®) , oder liegen sogar höher, dabei sind die Schaumkeramiken der Beispiele 1 bis 5 jedoch feuerfest und somit im Hochtemperaturbereich (über 600°C) einsetzbar.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zur Herstellung einer Schaumkeramik für das Wärmedämmen in Hochtemperaturbereichen, umfassend die Schritte:
Herstellen (1) einer wässrigen Suspension eines ersten mineralischen Rohstoffs;
Verschäumen (2) der Suspension mit Luft unter Beigabe eines Schaummittels und eines Bindemittels zu einem Leichtschaum;
Mischen (4) des Leichtschaums mit einem Pulver oder Schlicker eines zweiten keramischen Rohstoffs zu einem Schwerschaum;
Gießen (5) des Schwerschaums in eine Form;
Trocknen (6) des geformten Schwerschaums in der Form zu einem festen Schaum; und
Brennen (7) des festen Schaums in der Form zu der Schaumkeramik;
wobei zum Verschäumen (2) und/oder zum Mischen (4) Linearmischer eingesetzt werden.

2. Verfahren nach Anspruch 1, **dadurch gekennzeichnet, dass** die Form im Schritt des Brennens (7) zumindest teilweise abbrennt.

3. Verfahren nach Anspruch 1 oder 2, **dadurch gekennzeichnet, dass** die Form aus Bagasse oder Polymilchsäure gefertigt ist.

4. Verfahren nach einem der Ansprüche 1 bis 3, **dadurch gekennzeichnet, dass** die Form wasserabweisend ist.

5. Verfahren nach einem der Ansprüche 1 bis 4, **dadurch gekennzeichnet, dass** der feste Schaum zwischen den Schritten des Trocknens (6) und des Brennens (7) nicht manipuliert wird.

6. Verfahren nach einem der Ansprüche 1 bis 5, **dadurch gekennzeichnet, dass** der erste mineralische Rohstoff ein zweikomponentiges Pulver aus Muskovit-Glimmer und Quarz ist, bevorzugt mit einer d50-Korngröße von maximal 10 µm, besonders bevorzugt 3 µm.

7. Verfahren nach einem der Ansprüche 1 bis 6, **dadurch gekennzeichnet, dass** der zweite mineralische Rohstoff ein zweikomponentiges Pulver aus Muskovit-Glimmer und Quarz ist, bevorzugt mit einer d50-Korngröße von maximal 25 µm, besonders bevorzugt 4 µm.

8. Verfahren nach einem der Ansprüche 1 bis 5, **dadurch gekennzeichnet, dass** der erste und der zweite mineralische Rohstoff jeweils ein Pulver aus synthetischem Sintermullit sind, bevorzugt mit einer jeweiligen d50-Korngröße von maximal 30 - 40 µm, besonders bevorzugt 3 - 5 µm.

9. Verfahren nach einem der Ansprüche 1 bis 8, **dadurch gekennzeichnet, dass** die Suspension im Schritt des Herstellens (1) mehrere Stunden, bevorzugt zumindest 6 h, mit Mahlkugeln nassgemahlen wird.

10. Verfahren nach einem der Ansprüche 1 bis 9, **dadurch gekennzeichnet, dass** als Schaummittel ein nicht-ionisches Tensid oder ein Protein eingesetzt wird.

11. Verfahren nach einem der Ansprüche 1 bis 10, **dadurch gekennzeichnet, dass** als Bindemittel ein oder mehrere Vertreter aus der Gruppe Zellulosefasern, Zellulosederivate, Amylose, Amylopektin oder Cellobiose eingesetzt wird/werden.

12. Verfahren nach einem der Ansprüche 1 bis 11 unter Mischen des Leichtschaums mit Schlicker, **dadurch gekennzeichnet, dass** der Schlicker zusätzlich mit einem Verflüssiger versehen ist.

13. Verfahren nach Anspruch 12, **dadurch gekennzeichnet, dass** der Verflüssiger auf Alkalihuminat und/oder Alkalisilikat basiert.

14. Verfahren nach einem der Ansprüche 1 bis 13, **dadurch gekennzeichnet, dass** das Trocknen (6) bei einer Temperatur zwischen 30° und 200°C, bevorzugt zwischen 40° und 95°C, besonders bevorzugt bei 50°C, erfolgt.

15. Verfahren nach einem der Ansprüche 1 bis 14, **dadurch gekennzeichnet, dass** das Brennen (7) bei einer Temperatur zwischen 400° und 2000°C, bevorzugt zwischen 500° und 1650°C, besonders bevorzugt bei 960°C, erfolgt.

## Claims

1. A process for producing a foam ceramic for heat insulation in high temperature ranges, comprising the steps:
producing (1) an aqueous suspension of a first mineral raw material;
foaming (2) the suspension with air while adding a foaming agent and a binder to form a light foam;
mixing (4) the light foam with a powder or slip of a second ceramic raw material to form a heavy foam;
pouring (5) the heavy foam into a mold;
drying (6) the molded heavy foam in the mold to form a solid foam; and
firing (7) the solid foam in the mold to form the foam ceramic;
wherein linear mixers are used for foaming (2) and/or for mixing (4).

2. The process according to claim 1, **characterized in that** the mold at least partly burns off in the step of firing (7) .

3. The process according to claim 1 or 2, **characterized in that** the mold is made of bagasse or polylactic acid.

4. The process according to any one of claims 1 to 3, wherein the mold is hydrophobic.

5. The process according to any one of claims 1 to 4, **characterized in that** the solid foam is not manipulated between the steps of drying (6) and firing (7).

6. The process according to any one of claims 1 to 5, **characterized in that** the first mineral raw material is a two-component powder made of muscovite mica and quartz, preferably having a d50 particle size of maximum 10 µm, particularly preferably 3 µm.

7. The process according to any one of claims 1 to 6, **characterized in that** the second mineral raw material is a two-component powder made of muscovite mica and quartz, preferably having a d50 particle size of maximum 25 µm, particulalry preferably 4 µm.

8. The process according to any one of claims 1 to 5, **characterized in that** both the first and the second mineral raw materials are a powder made of synthetic sintered mullite, preferably having a d50 particle size of maximum 30 - 40 µm, particularly preferably 3 - 5 µm.

9. The process according to any one of claims 1 to 8, **characterized in that** in the step of producing (1), the suspension is wet ground with milling balls for several hours, preferably at least 6 h.

10. The process according to any one of claims 1 to 9, **characterized in that** a non-ionic surfactant or a protein is used as the foaming agent.

11. The process according to any one of claims 1 to 10, **characterized in that** one or more representatives of the group of cellulose fibers, cellulose derivatives, amylose, amylopectin, or cellobiose is/are used as the binder.

12. The process according to any one of claims 1 to 11 involving mixing of the light foam with slip, **characterized in that** the slip is additionally equipped with a liquefier.

13. The process according to claim 12, wherein the liquefier is based on alkali huminate and/or alkali silicate.

14. The process according to any one of claims 1 to 13, **characterized in that** the drying (6) is done at a temperature between 30° and 200°C, preferably between 40° and 95°C, particularly preferably at 50°C.

15. The process according to any one of claims 1 to 14, **characterized in that** the firing (7) is done at a temperature between 400° and 2000°C, preferably between 500° and 1650°C, particularly preferably at 960°C.

## Revendications

1. Procédé de fabrication d'une mousse céramique pour le calorifugeage dans des zones de température élevée, comprenant les étapes :
de fabrication (1) d'une suspension aqueuse d'une première matière brute minérale ;
de moussage (2) de la suspension avec de l'air moyennant une addition d'un agent moussant et d'un agent liant pour faire une mousse légère ;
de mélange (4) de la mousse légère avec une poudre ou une barbotine d'une seconde matière brute de céramique pour faire une mousse lourde ;
de coulage (5) de la mousse lourde dans un moule ;
de séchage (6) de la mousse lourde moulée dans le moule pour faire une mousse solide ; et
de cuisson (7) de la mousse solide dans le moule pour faire la mousse céramique ;
où des mélangeurs linéaires sont employés pour le moussage (2) et/ou le mélange (4).

2. Procédé selon la revendication 1, **caractérisé en ce que** le moule dans l'étape de la cuisson (7) est au moins partiellement brûlé.

3. Procédé selon la revendication 1 ou la revendication 2, **caractérisé en ce que** le moule est fabriqué à partir de bagasse ou d'acide polylactique.

4. Procédé selon l'une des revendications 1 à 3, **caractérisé en ce que** le moule est hydrophobe.

5. Procédé selon l'une des revendications 1 à 4, **caractérisé en ce que** la mousse solide n'est pas manipulée entre les étapes de séchage (6) et de cuisson (7).

6. Procédé selon l'une des revendications 1 à 5, **caractérisé en ce que** la première matière brute minérale est une poudre à deux composants à base d'un mica muscovite et de quartz, de préférence avec une taille granulaire d50 d'au maximum 10 µm, de manière particulièrement préférée, de 3 µm.

7. Procédé selon l'une des revendications 1 à 6, **caractérisé en ce que** la seconde matière brute minérale est une poudre à deux composants à base de mica muscovite et de quartz, de préférence avec une taille granulaire d50 d'au maximum 25 µm, de manière particulièrement préférée, de 4 µm.

8. Procédé selon l'une des revendications 1 à 5, **caractérisé en ce que** les première et seconde matières minérales brutes sont respectivement une poudre à base de sintermullite synthétique, de préférence avec une taille granulaire respective d50 d'au maximum 30 à 40 µm, de manière particulièrement préférée, de 3 à 5 µm.

9. Procédé selon l'une des revendications 1 à 8, **caractérisé en ce que** la suspension dans l'étape de fabrication (1) est soumise à une mouture par voie humide avec des billes de mouture pendant plusieurs heures, de préférence au moins 6 heures.

10. Procédé selon l'une des revendications 1 à 9, **caractérisé en ce qu'**en tant qu'agent moussant on emploie un tensioactif non ionique ou une protéine.

11. Procédé selon l'une des revendications 1 à 10, **caractérisé en ce qu'**en tant qu'agent liant on emploie un ou plusieurs représentants faisant partie du groupe des fibres de cellulose, des dérivés de cellulose, de l'amylose, de l'amylopectine ou de cellobiose.

12. Procédé selon l'une des revendications 1 à 11, moyennant un mélange de la mousse légère avec de la barbotine, **caractérisé en ce que** la barbotine est pourvue de manière complémentaire d'un liquéfacteur.

13. Procédé selon la revendication 12, **caractérisé en ce que** le liquéfacteur est à base d'un huminate alcalin et/ou d'un silicate alcalin.

14. Procédé selon l'une des revendications 1 à 13, **caractérisé en ce que** le séchage (6) a lieu à une température entre 30 ° et 200 °C, de préférence entre 40 ° et 95 °C, de manière particulièrement préférée, à 50 °C.

15. Procédé selon l'une des revendications 1 à 14, **caractérisé en ce que** la cuisson (7) a lieu à une température entre 400 ° et 2000 °C, de préférence entre 500 ° et 1650 °C, de manière particulièrement préférée, à 960 °C.
